# EUROPÄISCHE PATENTSCHRIFT

(11) **EP 0 958 260 B1**
(45) Veröffentlichungstag und Bekanntmachung des Hinweises auf die Patenterteilung: **21.11.2001**
(21) Anmeldenummer: 98908002.3
(22) Anmeldetag: 28.01.1998
(51) Int. Cl.: C04B 35/622, B22F 3/22

(54) **VERFAHREN ZUR HERSTELLUNG VON KERAMISCHEN ODER PULVERMETALLURGISCHEN BAUTEILEN**
METHOD FOR PRODUCING CERAMIC OR POWDER-METALLURGY COMPONENTS
PROCEDE DE FABRICATION DE COMPOSANTS DE CERAMIQUE OU DE METALLURGIE DES POUDRES

(30) Priorität: 29.01.1997 DE 19703177
(43) Veröffentlichungstag der Anmeldung: 24.11.1999
(73) Patentinhaber: FRAUNHOFER-GESELLSCHAFT ZUR FÖRDERUNG DER ANGEWANDTEN FORSCHUNG E.V., 80636 München (DE)
(72) Erfinder: LENK, Reinhard, D-02779 Grossschöna (DE); RICHTER, Claus, D-01662 Meissen (DE)
(74) Vertreter: Rauschenbach, Marion, Dipl.-Ing.
(86) Internationale Anmeldenummer: EP9800450
(87) Internationale Veröffentlichungsnummer: WO9832712

(56) Entgegenhaltungen:
- J KRIEGSMANN: "Keramische Werkstoffe" Januar 1995 , DEUTSCHER WIRTSCHAFTSDIENST , KÖLN XP002066571 19629 in der Anmeldung erwähnt Kap. 3.4.8.1
- DATABASE WPI Section Ch, Week 9503 Derwent Publications Ltd., London, GB; Class A32, AN 95-017075 XP002066572 & JP 06 302 448 A (SEIKO EPSON CORP)

## Beschreibung

### Technisches Gebiet

Die Erfindung bezieht sich auf die Gebiete der Keramik, der Pulvermetallurgie und des Maschinenbaus und betrifft ein Verfahren zur Herstellung von keramischen oder pulvermetallurgischen Bauteilen, die z.B. komplex geformte Bauteile aus Metall ersetzen können.

### Stand der Technik

Formkörper werden hergestellt, indem man von Rohlingen ausgehend eine mechanische Bearbeitung durchführt (Materialabtrag) oder von verformbarem Material ausgehend eine Umformung oder Formgebung durchführt. Die in den letzten Jahren entwickelten generativen Fertigungsverfahren (Rapid Prototyping) ermöglichen eine freiformende Bauteilfertigung durch lokale Materialverfestigung.

Bei dieser generativen Fertigung wird die Geometrie des Bauteiles dreidimensional beschrieben. Das erhaltene 3D-Bild wird in einer Dimension (in der Regel ist es die Höhe) in einzelne Scheiben zerlegt. Das Bauteil wird nun aufgebaut, indem Scheibe für Scheibe das Material innerhalb der Bauteilkontur verfestigt wird.

Die einzelnen generativen Fertigungsverfahren beruhen auf der lokalen Aushärtung von Polymeren (Stereolithographie STL, Solid Ground Curing SGC), dem lokalen Versintern von Pulvern (Selektives Laser Sintern SLS, Lasergenerieren), dem schichtweisen Auftrag von verflüssigtem Material (Fused Deposition Modelling FDM), oder der lokalen Bindung von Pulvern durch eine Binder (Three Dimensional Printing TDP).

Die Rapid Prototyping Verfahren werden gegenwärtig vorrangig zur Herstellung von Mustern aus Kunststoffen oder Wachsen angewandt. Die parallel entwickelten Folgetechnologien ermöglichen die Herstellung von Duplikaten aus Prototypen, oder die Herstellung von metallischen Prototypen.

Eine dieser Rapid Prototyping Verfahren ist das Vakuumgießen (Kistenmacher D., Int. Konf. 29.-30.9.1994 TU Dresden, JP 63191608 A, JP 03150115 A). Beim Vakuumgießen wird ein Urmodell im Vakuum mit Silicon umgossen, das danach über initiierte Vernetzungsprozesse aushärtet. Um das Modell nach dem Aushärten entformen zu können, wird vor dem Abgießen die Formteilung markiert. Nachdem die Form aufgeschnitten und das Modell entnommen worden ist, können je nach Komplexität des Modells zwischen 25 und 30 Abgüsse erstellt werden. In der Siliconform können Wachse und verschiedene Gießharze abgegossen werden. Das Verfahren eignet sich besonders für filigrane und komplexe Modelle, die auch Hinterschneidungen aufweisen können.

Bauteile aus keramischen oder pulvermetallurgischen Werkstoffen werden ausgehend von Pulvern nach einer Pulvertechnologie hergestellt. Die Pulvertechnologie schließt die Formgebung von Pulvern zu einem Grünkörper und deren anschließende Wärmebehandlung (Entbindern, Sintern) ein. Je nach dem, welche Anforderungen an die Werkstoffeigenschaften des Bauteils und damit an die Pulverqualität (Feinheit, Dotierung mit Additiven usw.) gestellt werden, sind zusätzliche technologische Schritte, wie z.B. eine Mischmahlung notwendig.

Die Formgebung sehr feiner Pulver erfolgt nicht direkt unter Zugrundelegung der Pulverausgangskörnung, sondern, je nach Fertigungsverfahren, ausgehend von Granulat, Schlicker oder (thermo)plastischen Formmassen. Diese Zwischenprodukte werden mit Hilfe unterschiedlicher temporärer Bindemittel (organischer Additive) hergestellt, die nach der Formgebung, noch vor dem Sinterprozeß, ausgetrieben werden müssen.

Es ist auch üblich, durch Formgebung Rohformlinge zu fertigen und diese im geformten, gehärteten, geglühten oder gesinterten Zustand mechanisch zu bearbeiten.

Welches Formgebungsverfahren für die Fertigung von Bauteilen angewandt wird, entscheiden technische und wirtschaftliche Grenzen (Jaschinski, W. u.a. Pulvermetall in Wissenschaft und Praxis, Band 7, VDI-Verlag, Düsseldorf, 1991 S. 33 - 49). Zunächst einmal ist die Geometrie des Bauteils ausschlaggebend, vor allem hinsichtlich der technischen Grenzen einzelner Formgebungsverfahren. Aus wirtschaftlicher Sicht (z.B. Amortisation des Werkzeugs) ist die Stückzahl eine wichtige Größe.

Bekannt ist auch die thermoplastische Formgebung unter hohen Drücken, z.B. Spritzgießen (Haupt, U. Technische Keramische Werkstoffe, Kapitel 3.4.8.0, Deutscher Wirtschaftsdienst) und unter niedrigen Drücken, z.B. Heißgießen oder Niedrigdruckspritzgießen (Lenk, R. Technische Keramische Werkstoffe, Kapitel 3.4.8.1, Deutscher Wirtschaftsdienst). In letzterem Fall wird eine thermoplastisch gebundene, und damit bei höheren Temperaturen fließfähige Masse in eine geschlossenen Metallform gedrückt. Nach Erkalten der Masse und Öffnen des Werkzeuges wird ein gut handhabbares Bauteil mit komplexer Geometrie erhalten, das vor dem Sintern entbindert werden muß.

Der wesentliche Vorteil der thermoplastische Formgebung (endformnahe Fertigung von komplexen Geometrien) kommt erst bei großen Stückzahlen zum Tragen, da die Formen für das Spritzgießen sehr teuer sind. Formen für das Heißgießen sind zwar ungefähr 3 bis 10 mal kostengünstiger als Spritzgußformen, amortisieren sich jedoch auch erst ab Stückzahlen > 100. Deshalb sind die im Stand der Technik beschriebenen Verfahren mit den notwendigen teuren Formen nicht geeignet, um kostengünstig einzelne Funktionsmuster mit komplexen Geometrien zu erhalten. Neben den hohen Werkzeugkosten sind aber auch die Investitionskosten für eine Spritzgießmaschine oder eine Heißgießanlage sehr hoch und behindern deshalb eine flexible Funktionsmusterherstellung.

Für die Funktionsmusterfertigung ist es auch üblich, durch Preßformung Rohformlinge zu fertigen und diese im geformten, gehärteten, geglühten oder gesinterten Zustand mechanisch zu bearbeiten. Die mechanische Bearbeitung von Rohlingen ist jedoch ebenfalls aufwendig und mit hohen Investitionskosten verbunden.

Von R. Lenk: Heißgießen von Keramik, Technische Keramische Werkstoffe, Hrsg. Prof. J. Kriegesmann, Kap. 3.4.8.1, Deutscher Wirtschaftsdienst, wird beschrieben, daß das Heißgießen gegenüber dem Spritzgießen die Verformung von Massen mit geringerer Viskosität bei geringeren Temperaturen und unter deutlich niedrigeren Drücken ermöglicht. Diesen technologischen Besonderheiten werden Vorteile hinsichtlich eines geringeren Formenverschleisses, sowie der Möglichkeit des Einsatzes von alternativen Werkstoffen für den Formenbau (nicht ausschließlich gehärteter Stahl) zugeschrieben.

Es wurde weiterhin bereits vorgeschlagen, daß für die Herstellung von Bauteilen mit schraubenförmiger Gestaltung der Außenkontur elastische Formen, z.B. aus Kautschuk verwendet werden. Ebenfalls wurde bereits vorgeschlagen, daß flache einseitig strukturierte Bauteile durch Vergießen und anschließende Verfestigung von thermoplastischen Schlickern in elastischen, beheizbaren Formen, z.B. in Kautschuk hergestellt werden. Die Geometrie der gefertigten Formkörper bildet die Kontur des Formennestes ab.

### Darstellung der Erfindung

Die Aufgabe der Erfindung besteht darin, ein Verfahren zur Herstellung von keramischen oder pulvermetallurgischen Bauteilen anzugeben, durch das komplex geformte Bauteile als Funktionsmuster in Einzelstücken oder in kleinen Serien wirtschaftlich günstig hergestellt werden können

Die Aufgabe wird gelöst durch die in den Ansprüchen angegebene Erfindung. Weiterbildungen sind in den Unteransprüchen enthalten.

Überraschenderweise hat sich gezeigt, daß für die Formgebung von thermoplastischen Schlickern mit einem bestimmten Viskositätsbereich keine Drücke größer dem atmospärischen Druck notwendig sind, sondern daß ein Fließen und damit Füllen der Form bereits durch geringe Druckdifferenzen, wie sie bei der Herstellung eines Vakuums auftreten, möglich ist.
Natürlich ist der Einsatz von Druck zum Füllen der Formen im Rahmen des erfindungsgemäßen Verfahrens möglich. Dabei wird der thermoplastische Schlicker unter einem Druck bis beispielsweise 10 MPa in die Form eingebracht. Entweder vor, während des Füllens oder danach wird dann die Form evakuiert.

Durch das erfindungsgemäße Verfahren wird es möglich, sehr einfach und sehr kostengünstig Formen für die Abformung von keramischen oder pulvermetallurgischen Funktionsmustern herzustellen. Diese Formen sind für eine mehrfache Abformung und damit für die Fertigung von Musterserien geeignet. Für die Abformung selbst ist keine aufwendige Formgebungs- oder Bearbeitungstechnik erforderlich. Damit ist eine kostengünstige und flexible Musterfertigung möglich.

Die erfindungsgemäß hergestellten Bauteile weisen den besonderen Vorteil auf, daß ihre geometrische Außenkontur bereits nach der Formgebung vollständig gegeben ist. Die so hergestellten Formkörper werden anschließend gesintert und sind dann einsetzbare keramische oder pulvermetallurgische Bauteile.

Es ist weiterhin vorteilhaft, daß die eingesetzten Formen mehrfach verwendet werden können. Die elastischen Kunststoffformen ermöglichen die Herstellung von Formkörpern mit Hinterschneidungen, ohne daß der Aufbau der Formen komplizierter wird.

Die Viskosität des eingesetzten thermoplastischen Schlickers muß ≤ 4,0 Pa · s sein, damit der thermoplastische Schlicker durch die sich bei der Herstellung des Vakuum ergebenden maximalen Druckdifferenzen von bis zu 0,1 MPa fließfähig bleibt. Die Viskosität des thermoplastischen Schlickers darf wiederum nicht ≤ 0,05 Pa · s sein, da sonst durch die Dichteunterschiede von Keramik- und Pulvermetallteilchen und Binderbestandteilen eine Entmischung auftritt. Die Gefahr der Entmischungen hängt von der Dichte der Feststoffteilchen und ihrer Teilchengröße ab. Dabei gilt, je größer die Dichte und die Größe der Feststoffteilchen ist, um so größer ist die Gefahr von Entmischungen.

Die Formgebung wird erfindungsgemäß bei einer Temperatur zwischen 40 und 180 °C durchgeführt. Bei Temperaturen unter 40 °C ist der thermoplastische Schlicker nicht fließfähig, bei Temperaturen über 180 °C verdampfen die thermoplastischen Binderanteile.
Weiterhin ist es vorteilhaft, wenn die Form vor dem Einbringen des thermoplastischen Schlickers beheizt und/oder nach dem Einbringen des thermoplastischen Schlickers die Form gekühlt wird.

Das Vakuum beträgt zwischen ≥ 5 Pa und ≤ 0,09 MPa. Bei zu geringem Vakuum ist die sich ergebende Druckdifferenz zu gering, um ein Fließen des thermoplastischen Schlickers in die Form zu ermöglichen. Bei zu hohem Vakuum kommt es bei der Verarbeitungstemperatur zum Verdampfen von Binderbestandteilen, wodurch das Feststoff/Binder-Verhältnis geändert wird und der thermoplastische Schlicker sein Fließverhalten ändert.

Es ist weiterhin vorteilhaft, wenn die Form lichtdurchlässig oder lichtdurchscheinend ist. Dadurch kann beim Formgebungsprozess eine optische Kontrolle durchgeführt werden.
Es ist auch vorteilhaft, wenn die Formgebung unter einer Kontrolle des Einfüllvolumens (-gewichtes) der thermoplastischen Masse stattfindet.
Beide Kontrollen führen zu einer Qualitätsverbesserung.

### Bester Weg zur Ausführung der Erfindung

Im weiteren wird die Erfindung an mehreren Ausführungsbeispielen erläutert

### Beispiel 1

1000 g Aluminiumnitridpulver mit einer spezifischen Pulveroberfläche von 3 m²/g und einem Zusatz von 4 Ma.-% Yttriumoxid werden mit 300 g thermoplastischen Bindemittel ( 220 g Paraffin und 80 g Stearinsäure) bei 100 °C in einer beheizten Kugelmühle compoundiert.

Von einem Zahnrad aus Metall, welches als Modell für das herzustellende Bauteil dient, wird eine Negativform aus Kautschuk hergestellt. Bei der Formherstellung wird die Schwindung des zukünftigen Bauteiles beim Sintern berücksichtigt. Diese Form ist vakuumdicht zusammenbaubar. In diese Form wird der keramische Schlicker durch eine im oberen Teil der Form vorhandene Einfüllöffnung gefüllt. Der keramische Schlicker hat beim Einfüllen eine Viskosität von 1 Pa · s und eine Temperatur von 90 °C. Diese Temperatur des Schlickers wird erreicht, da dieser sich in einem beheizbaren Behälter befindet.

Die gefüllte Form wird 5 Minuten bei einer Temperatur von 100 °C einem Vakuum von 0,01 MPa ausgesetzt. Danach wird die Form auf Raumtemperatur abgekühlt. Dann kann der Formkörper entformt werden. Die Form kann für die Herstellung weiterer Formkörper wiederverwendet werden.

Der Formkörper wird anschließend bei 1750 °C unter N₂-Atmosphäre 1h gesintert. Nach dem Sintern weist das keramische Bauteil die gleiche Form und die gleichen Abmessungen wie das Modellzahnrad auf.

### Beispiel 2

1000 g Zirkonoxidpulver mit einer spezifischen Pulveroberfläche von 15 m²/g werden mit 200 g thermoplastischen Bindemittel (150 g Paraffin und 50 g Stearinsäure) bei 100 °C in einer beheizten Kugelmühle compoundiert und entlüftet.

Von einem Fadenführer aus Hartmetall, welcher als Modell für das herzustellende Bauteil dient, wird eine Negativform aus Kautschuk hergestellt. Bei der Formherstellung wird die Schwindung des zukünftigen Bauteiles beim Sintern berücksichtigt. Diese Form ist vakuumdicht zusammenbaubar. In diese Form wird der Schlicker durch eine im oberen Teil der Form vorhandene Einfüllöffnung gefüllt. Der Schlicker hat beim Einfüllen eine Viskosität von 1,2 Pa · s und eine Temperatur von 100 °C. Diese Temperatur des Schlickers wird erreicht, da dieser sich in einem beheizbaren Behälter befindet.

Die gefüllte Form wird 10 Minuten bei einer Temperatur von 120 °C einem Vakuum von 0,015 MPa ausgesetzt. Danach wird die Form auf Raumtemperatur abgekühlt. Dann kann der Formkörper entformt werden. Die Form kann für die Herstellung weiterer Formkörper wiederverwendet werden.

Der Formkörper wird anschließend bei 1350 °C unter Luft 2 h gesintert. Nach dem Sintern weist das Bauteil die gleiche Form und die gleichen Abmessungen wie der Modellfadenführer auf.

### Beispiel 3

1000 g Hartmetallpulver mit einer spezifischen Pulveroberfläche von 15 m²/g werden mit 100 g thermoplastischen Bindemittel (80 g Paraffin und 20 g Stearinsäure) bei 100 °C in einer beheizten Kugelmühle compoundiert.

Von einer Düse aus Kupfer, welche als Modell für das herzustellende Bauteil dient, wird eine Negativform aus Kautschuk hergestellt. Bei der Formherstellung wird die Schwindung des zukünftigen Bauteiles beim Sintern berücksichtigt. Diese Form ist vakuumdicht zusammenbaubar. in diese Form wird der Schlicker durch eine im oberen Teil der Form vorhandene Einfüllöffnung gefüllt. Der Schlicker hat beim Einfüllen eine Viskosität von 0,9 Pa · s und eine Temperatur von 100 °C. Diese Temperatur des Schlickers wird erreicht, da dieser sich in einem beheizbaren Behälter befindet.

Die gefüllte Form wird 5 Minuten bei einer Temperatur von 100 °C einem Vakuum von 0,015 MPa ausgesetzt. Danach wird die Form auf Raumtemperatur abgekühlt. Dann kann der Formkörper entformt werden. Die Form kann für die Herstellung weiterer Formkörper wiederverwendet werden.

Der Formkörper wird anschließend bei 1450 °C gesintert. Nach dem Sintern weist das Bauteil die gleiche Form und die gleichen Abmessungen wie die Modelldüse auf.

## Patentansprüche

1. Verfahren zur Herstellung von keramischen oder pulvermetallurgischen Bauteilen, bei denen aus keramischen Materialien oder aus pulvermetallurgischen Materialien und aus einem oder mehreren thermoplastischen Bindemitteln ein thermoplastischer Schlicker hergestellt wird und dieser thermoplastische Schlicker in eine Form eingebracht wird, deren Innenkontur der Außenkontur des keramischen oder pulvermetallurgischen Bauteils entspricht, wobei eine Viskosität des einzubringenden thermoplastischen Schlickers von ≥ 0,05 Pa · s bis ≤ 4,0 Pa · s eingestellt wird, und die Form vor und/oder während und/oder nach dem Einbringen des thermoplastischen Schlickers auf einen Druck zwischen ≥ 5 Pa und ≤ 0,09 MPa evakuiert wird, wobei eine evakuierbare Form verwendet wird, und das Einbringen des thermoplastischen Schlickers bei Temperaturen zwischen 40 °C und 180 °C durchgeführt wird, danach der thermoplastische Schlicker in der Form verfestigt wird, und der erhaltene Grünkörper anschließend einer Wärmebehandlung unterzogen wird.

2. Verfahren nach Anspruch 1, bei dem als keramisches Material Siliziumnitrid, Siliciumcarbid, Aluminiumoxid, Zirkonoxid, Aluminiumnitrid verwendet wird.

3. Verfahren nach Anspruch 1, bei dem als pulvermetallurgisches Material Hartmetall verwendet wird.

4. Verfahren nach Anspruch 1, bei dem der Grünkörper aus keramischen oder pulvermetallurgischen Materialien nach der Formgebung mechanisch bearbeitet wird.

5. Verfahren nach Anspruch 1, bei dem eine Form oder mehrere Formen eingesetzt werden, die vakuumdicht und/oder dicht zusammenbaubar sind.

6. Verfahren nach Anspruch 1, bei dem eine Form eingesetzt wird, die durch eine oder mehrere Trennebenen ganz oder teilweise geteilt und mit oder ohne Querteilung(en) versehen ist.

7. Verfahren nach Anspruch 1, bei dem eine elastische Form und/oder eine Form aus Metall eingesetzt wird, die ein- oder mehrteilig ist.

8. Verfahren nach Anspruch 1, bei dem eine Form eingesetzt wird, die lichtdurchlässig oder lichtdurchscheinend ist.

9. Verfahren nach Anspruch 1, bei dem eine beheizbare Form eingesetzt wird.

10. Verfahren nach Anspruch 1, bei dem das Einfüllen des thermoplastischen Schlickers mit einem Druck ≤ 10 MPa und ≥ 0,1 MPa durchgeführt wird.

11. Verfahren nach Anspruch 1, derart modifiziert daß die Formgebung drucklos durchgeführt wird.

12. Verfahren nach Anspruch 1, bei dem zur Evakuierung der Form ein Vakuum zwischen 20 Pa und 0,01 MPa eingestellt wird.

13. Verfahren nach Anspruch 1, bei dem eine Viskosität des einzubringenden thermoplastischen Schlickers von 0,1 Pa · s bis 2,0 Pa · s eingestellt wird.

## Claims

1. Method for producing ceramic or powder-metallurgical components, with which a thermoplastic slip consisting of ceramic materials or of powder-metallurgical materials and of one or more thermoplastic binders is produced, and said thermoplastic slip is introduced into a mould whose inner contour matches the outer contour of the ceramic or powder-metallurgical component, in which a viscosity of the thermoplastic slip to be introduced of ≥ 0.05 Pa · s to ≤ 4.0 Pa · s is set, and the mould is prior and/or during and/or after the introduction of the thermoplastic slip evacuated to a pressure of between ≥ 5 Pa and ≤ 0.09 Mpa, wherein an evacuatable mould is used, and the introduction of the thermoplastic slip is carried out at temperatures of between 40 °C and 180 °C, thereafter the thermoplastic clip is solidified in the mould, and the preform obtained is then subjected to a heat treatment.

2. Method according to claim 1, in which silicon nitride, silicon carbide, aluminium oxide, zirconium oxide, aluminium nitride is used as ceramic material.

3. Method according to claim 1, in which hard metal is used as powder-metallurgical material.

4. Method according to claim 1, in which the preform of ceramic or powder-metallurgical materials is worked mechanically after the shaping.

5. Method according to claim 1, in which one mould or several moulds are used, which are aesemblable vacuum tight and/or tight.

6. Method according to claim 1, in which a raould is used which is divided wholly or partly by one or more division areas and is provided with or without transverse division(s).

7. Method according to claim 1, in which an elastic mould and/or a mould of metal is used, which is one- or multipart.

8. Method according to claim 1, in which a mould is used which is translucent or transparent.

9. Method according to claim 1, in which a heated mould is used.

10. Method according to claim 1, in which the charging of the thermoplastic slip is carried out at a pressure ≤ 10 Mpa and ≥ 0.1 Mpa.

11. Method according to claim 1, modified in such a way that the shaping is carried out without the use of pressure.

12. Method according to claim 1, in which a vacuum of between 20 Pa and 0.01 Mpa is set for the evacuating of the mould.

13. Method according to claim 1, in which a viscosity of the thermoplastic slip to be introduced of 0.1 Pa · s to 2.0 Pa · s is set.

## Revendications

1. Procédé de fabrication de pièces en matière céramique ou en métal-lurgie des poudres,
selon lequel
on fabrique une barbotine thermoplastique à partir de matière céramique et/ou de matière de la métallurgie des poudres et d'un ou plusieurs liants thermoplastiques, et on introduit la barbotine thermoplastique dans un moule dont le contour intérieur correspond au contour extérieur de la pièce en céramique ou en métallurgie des poudres,
on règle une viscosité de la barbotine thermoplastique à introduire entre ≥ 0,05 Pa - s et ≤ 4,0 Pa - s
on fait le vide dans le moule avant et/ou pendant et/ou après introduction de la barbotine thermoptastique à une pression comprise entre ≥ 5 Pa et ≤ 0,09 Mpa, on utilise un moule mis sous vide et on introduit la barbotine thermoplastique à des températures comprises entre 40°C et 180°C, puis on laisse la barbotine thermoplastique durcir dans le moule et ensuite on soumet le produit non cuit, ainsi obtenu, à un traitement thermique.

2. Procédé selon la revendication 1,
selon lequel
on utilise comme matière céramique du nitrure de silicium, du carbure de silicium, et l'oxyde d'aluminium, de l'oxyde de zirconium et du nitrure d'aluminium.

3. Procédé selon la revendication 1,
**caractérisé en ce que**
comme matière de métallurgie des poudres on utilise un métal dur.

4. Procédé selon la revendication 1,
**caractérisé en ce que**
le produit non cuit, en matiére céramique ou en métallurgie des poudres, est usiné mécaniquement après sa mise en forme.

5. Procédé selon la revendication 1,
**caractérisé en ce qu'**
on utilise un ou plusieurs moules qui peuvent être assemblés de manière étanche au vide et/ou de manière étanche.

6. Procédé selon la revendication 1,
**caractérisé en ce qu'**
on utilise un moule divisé totalement ou partiellement par un ou plusieurs plans de jonction et ayant une ou plusieurs divisions transversales.

7. Procédé selon la revendication 1,
**caractérisé en ce qu'**
on utilise un moule élastique et/ou un moule en métal en une ou plusieurs parties.

8. Procédé selon la revendication 1,
**caractérisé en ce qu'**
on utilise un moule transparent à la lumière ou translucide.

9. Procédé selon la revendication 1,
**caractérisé en ce qu'**
on utilise un moule chauffé.

10. Procédé selon la revendication 1,
**caractérisé en ce que**
lors de l'introduction de la barbotine thermoplastique on travaille à une pression telle que ≤ 10 Mpa et ≥ 0,1 Mpa.

11. Procédé selon la revendication 1,
**caractérisé en ce qu'**
il est modifié par une mise en forme sans pression.

12. Procédé selon la revendication 1,
**caractérisé en ce que**
pour faire le vide dans le moule on fait un vide compris entre 20 Pa et 0,01 Mpa.

13. Procédé selon la revendication 1,
**caractérisé en ce qu'**
on règle une viscosité de la barbotine thermoplastique à mettre en place comprise entre 0,1 Pa - s et 2,0 Pa - s.
